# EUROPÄISCHE PATENTSCHRIFT

(11) **EP 1 135 902 B1**
(45) Veröffentlichungstag und Bekanntmachung des Hinweises auf die Patenterteilung: **06.05.2004**
(21) Anmeldenummer: 99966805.6
(22) Anmeldetag: 01.12.1999
(51) Int. Cl.: H04L 12/56, H04Q 11/04

(54) **VERFARHEN ZUM BETREIBEN VON PERIPHERIEBAUGRUPPEN INNERHALB EINER ATM-KOMMUNIKATIONSEINRICHTUNG**
METHOD FOR OPERATING INTERFACE MODULES IN AN ATM-COMMUNICATIONS DEVICE
PROCEDE PERMETTANT DE FAIRE FONCTIONNER DES COMPOSANTS PERIPHERIQUES DANS UN EQUIPEMENT DE COMMUNICATION ATM

(30) Priorität: 09.12.1998 DE 19856835
(43) Veröffentlichungstag der Anmeldung: 26.09.2001
(73) Patentinhaber: SIEMENS AKTIENGESELLSCHAFT, 80333 München (DE)
(72) Erfinder: KÖPP, Jörg, D-81476 München (DE); STELZL, Rudolf, D-85221 Dachau (DE)
(86) Internationale Anmeldenummer: PCT/DE1999/003808
(87) Internationale Veröffentlichungsnummer: WO 2000/035150

(56) Entgegenhaltungen:
- RATHGEB E P: "REDUNDANCY CONCEPTS FOR A LARGE ATM SWITCHING NODE" ISS. WORLD TELECOMMUNICATIONS CONGRESS. (INTERNATIONAL SWITCHING SYMPOSIUM),CA,TORONTO, PINNACLE GROUP, 1997, Seiten 425-433, XP000720548
- RATHGEB E P ET AL: "THE MAINSTREETXPRESS CORE SERVICES NODE - A VERSATILE ATM SWITCH ARCHITECTURE FOR THE FULL SERVICE NETWORK" IEEE JOURNAL ON SELECTED AREAS IN COMMUNICATIONS,US,IEEE INC. NEW YORK, Bd. 15, Nr. 5, 1. Juni 1997 (1997-06-01), Seiten 795-806, XP000657033 ISSN: 0733-8716 in der Anmeldung erwähnt

## Beschreibung

Die Erfindung betrifft ein Verfahren zum Betreiben von als aktiv und/oder redundant bestimmbaren Peripheriebaugruppen innerhalb einer ATM-Kommunikationseinrichtung, wobei die als aktiv und/oder redundant bestimmbaren Peripheriebaugruppen mit einer zentralen Steuereinheit verbunden sind.

In Kommunikationseinrichtungen, insbesondere nach dem asynchronen Transfermodus wirkenden Kommunikationseinrichtungen, werden häufig über Peripheriebaugruppen mit Hilfe einer zentralen Steuereinheit virtuelle Verbindungen aufgebaut, aufrechterhalten und beendet. Dabei werden mit Hilfe der zentralen Steuereinheit insbesondere Steuerbefehle zum Auf- und Abbau von virtuellen Verbindungen an die Peripheriebaugruppen übermittelt.

Um einen störungsfreien Betrieb sicherzustellen und um Fehler einer aktiven Peripheriebaugruppe beheben zu können, sind redundante Peripheriebaugruppen und/oder redundante Übertragungsstrecken vorgesehen. Beim Ausfall einer Peripheriebaugruppe oder Übertragungsstrecke wird die Kommunikationsverbindung, insbesondere virtuelle Verbindung auf eine redundante Peripheriebaugruppe und/oder Übertragungsstrecke umgesteuert. Dabei können je nach der geforderten Ausfallsicherheit einer Kommunikationseinrichtung oder Übertragungsstrecke für die dieser zugehörigen Peripheriebaugruppe unterschiedliche Redundanzstrukturen vorgesehen sein. Beispiele hierfür sind die "1+1"-, die "1:1"- und die "1:N"-Peripheriebaugruppen-Redundanz, siehe hierzu insbesondere "IEEE Journal on Selected Areas in Communications" VOL. 15, N.5, Juni 1997, Seiten 795 bis 806.

Bei einer "1+1"-Redundanzstruktur werden zwei Peripheriebaugruppen parallel betrieben, um darüber Nachrichtensignalströme redundant zu übermitteln. Dabei wird von diesen redundant übermittelten Nachrichtensignalströmen lediglich einer für die Weiterbehandlung der virtuellen Verbindung berücksichtigt.

Bei einer "1:1"-Peripheriebaugruppen-Redundanz ist nur eine von zwei Peripheriebaugruppen als aktive Peripheriebaugruppe benutzt, während auf die verbleibende, redundante Peripheriebaugruppe lediglich im Fehlerfalle der aktiven Peripheriebaugruppe umgeschaltet wird.

Bei einer "1:N"-Peripheriebaugruppen-Redundanz ist zusätzlich zu einer Mehrzahl N von Peripheriebaugruppen eine redundante Peripheriebaugruppe vorgesehen. Bei Auftreten eines Fehlers auf einer der N Peripheriebaugruppen wird anstelle dieser dann die redundante Peripheriebaugruppe ersatzgeschaltet.

Bei einer "1:N"-Peripheriebaugruppen-Redundanz wird üblicherweise zwischen den Peripheriebaugruppen und den externen Übertragungsleitungen eine Selektoranordnung geschaltet, welche die einzelnen Übertragungsleitungen auf die N Peripheriebaugruppen und die redundante Peripheriebaugruppe verteilen kann. Es sei jedoch darauf hingewiesen, daß bei Ausfall einer Selektoranordnung bzw. bei einem daraus resultierenden Tausch dieser Selektoranordnung sämtliche damit verbundenen Übertragungsleitungen und die über diese verlaufenden Verbindungen unterbrochen werden.

In den derzeitigen Kommunikationssystemen werden von der zentralen Steuereinheit Steuerbefehle ausschließlich an die aktive Peripheriebaugruppe übermittelt und die aktive Peripheriebaugruppe zeigt die Steuerbefehle der redundanten Peripheriebaugruppe mit Hilfe eines Kommunikationskanals an. Über den Erhalt der jeweiligen Steuerbefehle durch die redundante Peripheriebaugruppe wird die aktive Peripheriebaugruppe informiert. Weiterhin zeigt die aktive Peripheriebaugruppe den Erhalt der Steuerbefehle erst dann der zentralen Steuereinheit an, wenn die Quittierung der Steuerbefehle durch die redundante Peripheriebaugruppe erfolgt ist. Somit wird beim Verbindungsauf- bzw. -abbau jeder Steuerbefehl von der aktiven Peripheriebaugruppe zweifach bearbeitet, was zu einer erheblichen, zusätzlichen dynamischen Belastung der Peripheriebaugruppe führt.

Die der Erfindung zugrunde liegende Aufgabe besteht darin, die dynamische Belastung von als aktiv und/oder redundant bestimmbaren Peripheriebaugruppen innerhalb einer ATM-Kommunikationseinrichtung zu verringern. Die Aufgabe wird ausgehend von einem Verfahren gemäß den Merkmalen des Oberbegriffs des Patentanspruches 1 durch das Merkmal des kennzeichnenden Teils gelöst.

Der wesentliche Aspekt des erfindungsgemäßen Verfahrens ist darin zu sehen, daß die für den Auf- und Abbau zumindest einer virtuellen Verbindung vorgesehenen Steuerbefehle von der zentralen Steuereinheit annähernd gleichzeitig an die aktive und die redundante Peripheriebaugruppe übermittelt werden, wobei der zentralen Steuereinheit durch die redundante Peripheriebaugruppe der Erhalt der Steuerbefehle nicht angezeigt wird. Durch annähernd gleichzeitige Übermittlung der Steuerbefehle an die aktive und redundante Peripheriebaugruppe entfällt eine direkte Kommunikation zwischen der aktiven und redundanten Baugruppe und die Leistungsfähigkeit wird aufgrund der verkürzten Verbindungsauf- und -abbauzeiten erhöht. Desweiteren werden die zwischen der aktiven und redundanten Peripheriebaugruppe zum Austausch von Informationen vorgesehenen Kommunikationskanäle dynamisch entlastet und folglich sind Kommunikationskapazitäten des Kommunikationskanals für zusätzliche Anwendungen verfügbar.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes näher erläutert, wobei dabei lediglich diejenigen Elemente einer ATM-Kommunikationseinrichtung KE dargestellt sind, die für das Verständnis der vorliegenden Erfindung erforderlich sind.

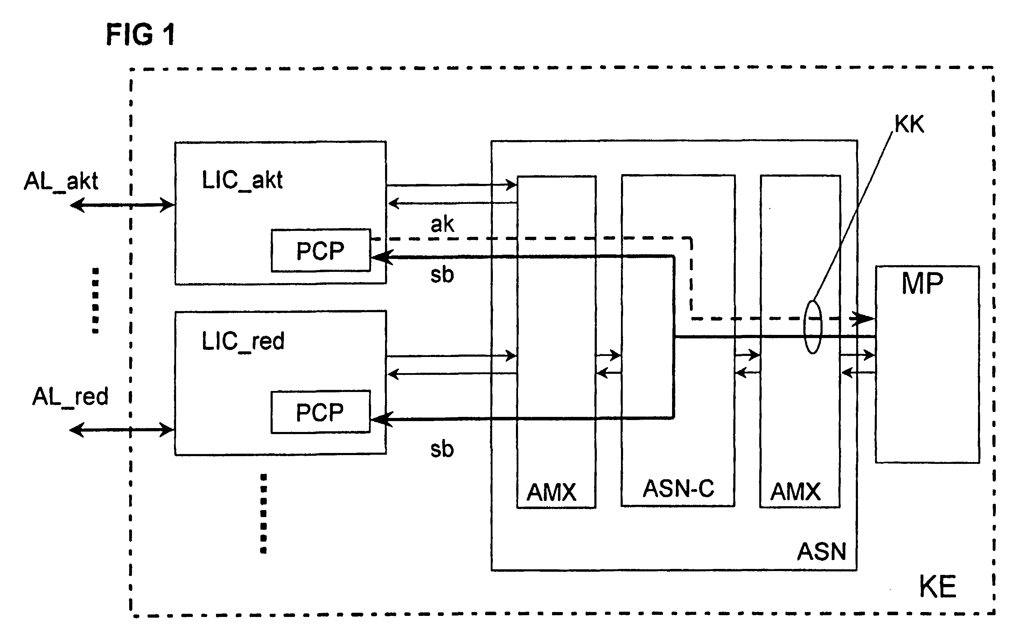

In FIG 1 ist eine nach dem Asynchronen Transfer Modus arbeitende ATM-Kommunikationseinrichtung KE dargestellt, welche eine Übertragung von ATM-Zellen über virtuelle Verbindungen ermöglicht. Die ATM-Kommunikationseinrichtung KE weist ein zentrales Koppelfeld ASN auf, daß über eine zentrale Koppelanordnung ASN-C (ASN-Core) und über zumindest eine mit der Koppelanordnung ASN-C verbundene ATM-Multiplexeinrichtung AMX verfügt.

An das zentrale Koppelfeld ASN bzw. an die zentrale Koppelanordnung ASN-C ist über eine ATM-Multiplexeinrichtung AMX eine zugeordnete zentrale Steuereinheit MP angeschlossen, die unter anderem für die Einrichtung von virtuellen Verbindungen vorgesehen ist. Weiterhin ist an das zentrale Koppelfeld ASN bei dem vorliegenden Ausführungsbeispiel über eine ATM-Multiplexeinrichtung AMX eine Mehrzahl von Peripheriebaugruppen LIC_akt, ...,LIC_red über beispielsweise bidirektionale Verbindungen angeschlossen, wobei die Peripheriebaugruppen LIC_akt, ...,LIC_red jeweils für den Anschluß zumindest einer von mehreren peripheren Übertragungsleitungen AL_akt,...,AL_red vorgesehen sind. Desweiteren sind diese Übertragungsleitungen AL_akt,...,AL_red für eine bidirektionale Übertragung von ATM-Zellen ausgebildet.

Die Peripheriebaugruppen LIC_akt, ...,LIC_red sind über einen zugeordneten Kommunikationskanal KK mit der zentralen Steuereinheit MP verbunden, wobei mit Hilfe des Kommunikationskanals KK Steuerbefehle sb von der zentralen Steuereinheit MP an die Peripheriebaugruppen LIC_akt, ...,LIC_red übermittelt werden.

Das vorliegende Ausführungsbeispiel zeigt eine ATM-Kommunikationseinrichtung KE mit einer "1+1"-Peripheriebaugruppen-Redundanz, bei der eine aktive und eine redundante Peripheriebaugruppe LIC_akt, LIC_red parallel betrieben werden, d.h. über die redundante Peripheriebaugruppe LIC_red werden dieselben Verbindungsdaten wie über die zugehörige aktive Peripheriebaugruppe LIC_akt übertragen. Beispielhaft ist in FIG 1 eine aktive und eine redundante Peripheriebaugruppe dargestellt. Jedoch wird für die Weiterbehandlung der virtuellen Verbindung nur einer der beiden ATM-Zellenströme berücksichtigt. Weiterhin weist jede Peripheriebaugruppe LIC_akt, ..., LIC_red eine baugruppenspezifische Steuereinheit PCP auf, die über den Kommunikationskanal KK von der zentralen Steuereinheit MP Steuerbefehle sb erhält.

Erfindungsgemäß werden die für den Auf- und Abbau einer virtuellen Verbindung vorgesehenen Steuerbefehle sb von der zentralen Steuereinheit MP annähernd gleichzeitig an die aktive und redundante Peripheriebaugruppe LIC_akt, LIC_red über den Kommunikationskanal KK übermittelt, wobei der zentralen Steuereinheit MP durch die redundante Peripheriebaugruppe LIC_red der Erhalt der Steuerbefehle sb nicht angezeigt wird. Im Gegensatz dazu zeigt die aktive Peripheriebaugruppe LIC_akt über den Kommunikationskanal KK der zentralen Steuereinheit MP mit Hilfe einer "Acknowledge"-Meldung ak den Erhalt des Steuerbefehls sb an.

Durch das annähernd gleichzeitige Übermitteln der Steuerbefehle sb an die aktive und redundante Peripheriebaugruppe LIC_akt, LIC_red ist sichergestellt, daß beide Peripheriebaugruppen LIC_akt, LIC_red annähernd gleichzeitig in denselben Betriebszustand gesteuert werden und somit beim Ausfall der aktiven Peripheriebaugruppe LIC_akt innerhalb kürzester Zeit auf die funktionsfähige, redundante Peripheriebaugruppe LIC_red umgeschaltet werden kann.

Die Anwendung des erfindungsgemäßen Verfahrens ist nicht auf "1+1"-Peripheriebaugruppen-Redundanzen beschränkt, sondern kann bei unterschiedlichen in ATM-Kommunikationseinrichtungen KE verwendeten Redundanzkonzepten eingesetzt werden. Hierunter fallen sowohl Peripheriebaugruppen-Redundanzen als auch Übertragungsstrecken-Redundanzen.

## Patentansprüche

1. Verfahren zum Betreiben von als aktiv und/oder redundant bestimmbaren Peripheriebaugruppen (LIC_akt,...,LIC_red) innerhalb einer ATM-Kommunikationseinrichtung (KE), wobei die als aktiv und/oder redundant bestimmbaren Peripheriebaugruppen (LIC_akt,...,LIC_red) mit einer zentralen Steuereinheit (MP) verbunden sind,
**dadurch gekennzeichnet,**
**daß** die für den Auf- und Abbau zumindest einer virtuellen Verbindung vorgesehenen Steuerbefehle (sb) von der zentralen Steuereinheit (MP) zeitnah an die aktive und die redundante Peripheriebaugruppe (LIC_akt,...,LIC_red) übermittelt werden, wobei der zentralen Steuereinheit (MP) durch die redundante Peripheriebaugruppe (LIC_red) der Erhalt der Steuerbefehle (sb) nicht angezeigt wird.

2. Verfahren nach Anspruch 1,
**dadurch gekennzeichnet,**
**daß** keine zusätzliche Synchronisation der redundanten und aktiven Peripheriebaugruppe (LIC_akt,...,LIC_red) durchgeführt wird.

3. Verfahren nach einem der Ansprüche 1 und 2,
**dadurch gekennzeichnet,**
**daß** nach Erhalt der Steuerbefehle (sb) die aktiven und redundanten Peripheriebaugruppen (LIC_akt,...,LIC_red) zeitnah in denselben Betriebszustand gesteuert werden.

## Claims

1. Method for operating interface modules (LIC_akt, ..., LIC_red), which can be specified as active and/or redundant, in an ATM communications device (KE), in which the interface modules (LIC_akt, ..., LIC_red), which can be specified as active and/or redundant, are connected to a central control unit (MP), **characterized in that** the control commands (sb) provided for the establishment and clearing of at least one virtual connection are transmitted approximately simultaneously from the central control unit (MP) to the active and the redundant interface module (LIC_akt, ..., LIC_red), and the central control unit (MP) is not notified by the redundant interface module (LIC_red) of receipt of the control commands (sb).

2. Method according to Claim 1, **characterized in that** no additional synchronization of the redundant and active interface module (LIC_akt, ..., LIC_red) is performed.

3. Method according to Claim 1 or 2, **characterized in that**, once the control commands have been received, the active and redundant interface modules (LIC_akt, ..., LIC_red) are switched to the same operating mode virtually simultaneously.

## Revendications

1. Procédé permettant de faire fonctionner, dans un équipement de communication ATM (KE), des composants périphériques (LIC_akt, ..., LIC_red) pouvant être définis comme étant des composants actifs et/ou redondants, lesdits composants périphériques (LIC_akt, ..., LIC_red) définissables comme composants actifs et/ou redondants étant reliés à une unité de commande centrale (MP),
**caractérisé en ce**
**que** les instructions de commande (sb) prévues pour l'établissement et la fermeture d'au moins une liaison virtuelle sont transmises presque simultanément aux composants périphériques actifs et redondants (LIC_akt, ..., LIC_red) par l'unité de commande centrale (MP), la réception des instructions de commande (sb) n'étant pas signalée à l'unité de commande centrale (MP) par le composant périphérique redondant (LIC_red).

2. Procédé selon la revendication 1,
**caractérisé en ce**
**qu'**aucune synchronisation additionnelle des composants périphériques redondants et actifs (LIC_akt, ..., LIC_red) n'est effectuée.

3. Procédé selon l'une des revendications 1 et 2,
**caractérisé en ce**
**qu'**après la réception des instructions de commande (sb) les composants périphériques actifs et redondants (LIC_akt, ..., LIC_red) sont commandés presque simultanément dans le même état de fonctionnement.
